# EUROPÄISCHE PATENTSCHRIFT

(11) **EP 2 207 724 B1**
(45) Veröffentlichungstag und Bekanntmachung des Hinweises auf die Patenterteilung: **18.04.2012**
(21) Anmeldenummer: 08850764.5
(22) Anmeldetag: 28.10.2008
(51) Int. Cl.: B65D 19/44, B65D 85/66

(54) **LAGERGUTTRÄGER FÜR HÜLSENFÖRMIGES LAGERGUT UND LAGERREGAL HIERFÜR**
STORAGE PRODUCT CARRIER FOR SLEEVE-SHAPED STORAGE PRODUCTS, AND STORAGE SHELF THEREFORE
ÉLÉMENT PORTEUR POUR PRODUIT À STOCKER EN FORME DE TUBE, ET RAYONNAGE DE STOCKAGE À CET EFFET

(30) Priorität: 16.11.2007 DE 202007016061 U
(43) Veröffentlichungstag der Anmeldung: 21.07.2010
(73) Patentinhaber: HÄNEL & CO., 9450 Altstätten SG (CH)
(72) Erfinder: GOLTZ, Mathias, 74252 Massenbachhausen (DE)
(74) Vertreter: Preissner, Nicolaus
(86) Internationale Anmeldenummer: PCT/EP2008/064603
(87) Internationale Veröffentlichungsnummer: WO 2009/062844

(56) Entgegenhaltungen:
- EP-A- 0 722 894
- WO-A1-03/047396
- DE-U1- 8 913 660
- DE-U1- 9 413 789
- DE-U1-202004 004 783
- FR-A- 2 570 684
- FR-A1- 2 793 311
- US-A- 3 388 806
- US-A- 5 163 567
- US-A- 6 119 875

## Beschreibung

Die Erfindung betrifft einen Lagergutträger für ein Lagerregal, das eine Vielzahl von übereinanderliegenden und beabstandeten Trägerstützen aufweist, die paarweise an sich gegenüberliegenden Seitenwänden des Lagerregals angeordnet sind und die den Lagergutträger abstützen, wobei der Lagergutträger einen Grundkörper aufweist, der von einer Randwand des Lagergutträgers umgeben ist. Der Lagergutträger weist eine Stützwand auf, die von dem Grundkörper abragt, wobei an der Stützwand Tragarme vorgesehen sind, die von der Stützwand abragen. Auf den Tragarmen ist hülsenförmiges Lagergut, insbesondere Rollenbuchsen, ablegbar und die Tragarme sind gegenüber dem Grundkörper unter einem Winkel, der insbesondere zwischen 0° und 5° beträgt, geneigt. Darüber hinaus betrifft die Erfindung ein Lagerregal mit einem Lagergutträger und einer steuerbaren Transporteinrichtung für Lagergutträger.

Derartige Lagergutträger werden insbesondere zur Lagerung von Lagergut in automatisierten Vertikalliften verwendet, die eine Transporteinrichtung für die Lagergutträger aufweisen. Da die Anordnung in dem Lagerregal abhängig von der Höhe des Lagerguts erfolgt, lassen sich auf den Lagergutträgern Lagergüter verschiedener Größen platzsparend einlagern.

Ein Lagerregal, in dem ähnliche Lagergutträger Verwendung finden, zeigt die EP 0 722 894 A1. Zur Abstützung der Lagergutträger sind in diesem Lagerregal in aus einem Stahlblech gefertigten Seitenwänden eingeformte Trägerauflagen vorgesehen, die die Lagergutträger abstützen. Weiter ist vorgesehen, die Lagerplätze den Lagergutträgern abhängig von der Höhe des Lagerguts zuzuweisen. Somit wird der verfügbare Lagerplatz bestmöglich ausgenutzt.

Für eine effiziente Lagerung von Garnspulen wird in EP 0 310 159 B1 vorgeschlagen, an einem Lagergerüst Tragarme vorzusehen, die in eine Mittenöffnung der Garnspulen einführbar sind. Die Tragarme sind dabei fest mit dem Gerüst verbunden.

Aus der US 5,688,098 ist ein ähnliches Gerüst bekannt, bei dem die Tragarme nicht fest an dem Gerüst befestigt, sondern entfernbar eingehakt sind.

Die FR 2 793 311 A1 zeigt eine gattungsgemäße Vorrichtung zur Aufnahme von Teilen, die thermisch behandelt werden sollen. Auf einer Grundplatte ist mithilfe von Stützwinkeln eine Rückwand befestigt. Von der Rückwand ragen Tragarme ab, die in Öffnungen der Rückwand eingesetzt werden können. Auf die Tragarme kann Lagergut, das eine Öffnung aufweist, aufgeschoben werden. Die gesamte Vorrichtung soll aus thermisch beständigen Verbundwerkstoffen hergestellt sein.

Besonders in der Druckindustrie stellt sich das Problem, Druckplatten, die in Form von Rollenbuchsen vorliegen, lagern zu müssen. Solches Lagergut hat eine empfindliche Oberfläche und ist für mechanische Beschädigungen und Verformung anfällig.

Die Erfindung geht auf die **Aufgabe** zurück, einen Lagergutträger der eingangs genannten Art so auszugestalten, dass hülsenförmiges Lagergut darin sicher und stabil gelagert werden kann.

Zur **Lösung** dieser Aufgabe wird ein Lagergutträger gemäß Patentanspruch 1 vorgeschlagen.

Der erfindungsgemäße Lagergutträger hat den Vorteil, dass Metallschellen eine große Auflagefläche bieten, so dass der Druck der Befestigung gleichmäßiger auf die Oberflächen der Tragarme verteilt wird. Dadurch ist eine stärkere Belastung der Tragarme möglich. Befestigungsflansche können einfach und günstig an der Stützwand fixiert werden und bieten die Möglichkeit, mit wenigen Befestigungsöffnungen, durch welche Befestigungsmittel geführt werden, eine sichere, kraftschlüssige Verbindung der Stützwand mit den Befestigungselementen zu erreichen. Die Verwendung von symmetrisch zueinander angeordneten Metallschellen bringt es mit sich, dass die Metallschellen sich, wenn sie fest gezogen werden, an die Form der Oberfläche der Tragarme, die sie umgeben, anpassen und so eine besonders gleichmäßige Druckverteilung erreichen.

Vorteilhafte Ausgestaltungen sind Gegenstand der Unteransprüche.

In vorteilhafter Ausgestaltung ist ein Stützwinkel vorgesehen, der die Stützwand an dem Grundkörper fixiert und einen Winkel zwischen Stützwand und Grundkörper festlegt. Dadurch wird der gesamte Aufbau stabilisiert.

Der Winkel zwischen Stützwand und Grundkörper kann zwischen 85° und 90° betragen.

Der Stützwinkel kann an dem Grundkörper sowohl auf einer Tragarmseite der Stützwand als auch auf der gegenüberliegenden Seite der Stützwand befestigt sein. Dadurch wird die Stabilität des Aufbaus, insbesondere bei Vibrationen oder Erschütterungen senkrecht zu der Stützwand, verbessert.

Die Tragarme sind vorteilhaft lösbar an der Stützwand befestigt, so dass beschädigte Tragarme einfach und kostengünstig ausgetauscht werden können.

In weiterer vorteilhafter Ausgestaltung können Tragarme unterschiedlicher Querschnittsform und Größe an der Stützwand befestigbar sein. Dies erhöht die Flexibilität des Einsatzes des erfindungsgemäßen Lagergutträgers.

Die Tragarme ragen im Wesentlichen rechtwinklig von der Stützwand ab. Ein solcher rechter Winkel ist einfach zu realisieren, was den Aufbau des Lagergutträgers vereinfacht.

In einer weiteren Ausgestaltung sind die Tragarme aus umgeformtem Metallblech gefertigt. Dies hat den Vorteil, dass die Tragarme ein geringes Gewicht aufweisen, was die Nutzlagekapazität des Lagergutträgers erhöht.

In weiterer vorteilhafter Ausgestaltung sind die Tragarme aus Röhrenabschnitten gefertigt. Insbesondere Röhrenabschnitte mit einem kreis- oder ovalförmigen Querschnitt weisen eine im Verhältnis zu ihrem Gewicht hohe Stabilität auf.

Die Stützwand kann ein Tragblech mit Öffnungen zur Einführung der Tragarme aufweisen. Dieses Tragblech verstärkt den Aufbau der Stützwand und bewirkt so eine verbesserte Stabilität.

Die Ränder des Tragblechs können umgebogen sein und einen Randflansch bilden. Ein solcher Randflansch verstärkt das Tragblech in dessen Randbereich und erhöht somit weiter die Stabilität des Lagergutträgers. In einer weiteren vorteilhaften Ausgestaltung weist die Stützwand Verstärkungsstreben auf, die insbesondere die Verwindungssteifigkeit der Stützwand erhöhen.

Die Befestigungsflansche sind in einer vorteilhaften Ausgestaltung im Bereich der Verstärkungsstreben angeordnet. Da die Stützwand im Bereich der Verstärkungsstreben besonders stabil ist, ist in diesem Bereich auch eine besonders stabile Befestigung der Tragarme mittels der Befestigungsflansche möglich.

Die Stützwand weist im Bereich der Tragarme vorteilhaft ein Dämpfungselement auf. Dadurch wird ein direkter Kontakt des Lagerguts mit der Stützwand vermieden.

Die Erfindung umfasst weiterhin ein Lagerregal gemäß Patentanspruch 10. Eine vorteilhafte Ausgestaltung des Lagerregals ist Gegenstand des Patentanspruchs 11.

Die Erfindung wird nachfolgend an Hand eines Ausführungsbeispieles, das in den beigefügten Zeichnungen schematisch dargestellt ist, näher erläutert. Es zeigen:
- Fig. 1: eine Seitenansicht eines erfindungsgemäßen Lagergutträgers;
- Fig. 2a: eine Ansicht in Richtung des Pfeiles IIa in Fig. 1;
- Fig. 2b: eine Ansicht in Richtung des Pfeiles IIb in Fig. 1;
- Fig. 3: einen Querschnitt durch die Befestigungselemente an einem Tragarm und
- Fig. 4: eine perspektivische Ansicht eines Lagerregals zur Aufnahme eines Lagergutträgers gemäß der vorliegenden Ausführungsform.

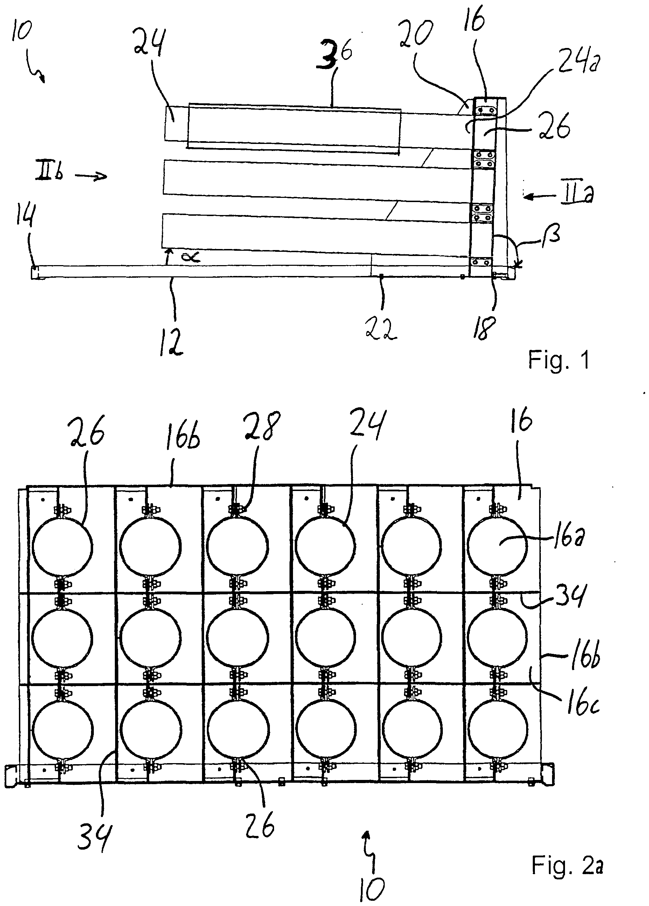

Der in Fig. 1 gezeigte Lagergutträger 10 weist einen Grundkörper 12 auf, der von einer Randwand 14 umgeben ist. Von dem Grundkörper 12 ragt eine Stützwand 16 unter einem Winkel β ab. Zur Abstützung und Stabilisierung der Stützwand 16 ist ein Stützwinkel 20 vorgesehen, der an dem Grundkörper 12 mit Schrauben 22 befestigt ist.

An der Stützwand 16 sind hiervon abragende Tragarme 24 befestigt, auf denen hülsenförmiges Lagergut 36, insbesondere in der Druckindustrie verwendete Rollenbuchsen, ablegbar ist. Die Tragarme 24 sind im Wesentlichen senkrecht an der Stützwand 16 montiert. Um eine Neigung der Tragarme 24 in einem Winkel α gegenüber dem Grundkörper 12 zu erzeugen, wird die Stützwand 16 so an dem Stützwinkel 20 befestigt, dass die Stützwand 16 gegenüber der Senkrechten geneigt ist. Dadurch ergibt sich, ein Winkel α von ca. 1,6° zwischen dem Grundkörper 12 und den Tragarmen 24.

Wie aus Fig. 2a ersichtlich ist, weist der Lagergutträger 10 achtzehn Tragarme 24 auf, die in drei übereinander liegenden und voneinander beabstandeten Reihen angeordnet sind. Die Tragarme 24 sind mit Befestigungselementen 26 an der Stützwand 16 befestigt. Die Befestigungselemente 26 werden von Bogenschellen gebildet. Dazu umschließen jeweils zwei Befestigungselemente 26 ein Befestigungsende 24a des Tragarms 24. Die Befestigungselemente 26 sind dabei mittels Schrauben 28 kraftschlüssig verbunden.

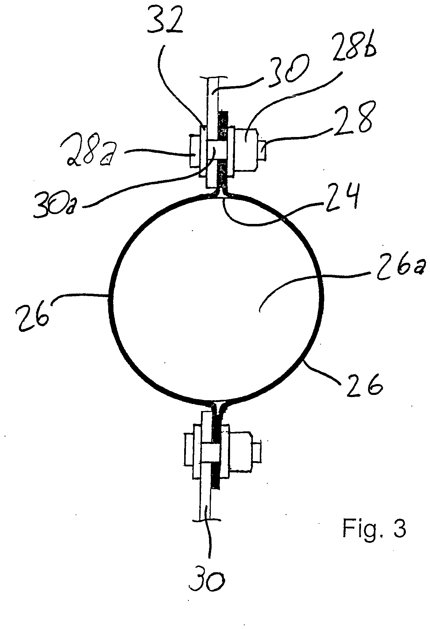

Fig. 3 zeigt die Befestigung der Tragarme 24 an der Stützwand 16. Die Befestigung des Tragarms 24 mittels der Befestigungselemente 26 an der Stützwand 16 erfolgt an Befestigungsflanschen 30, die an der Stützwand 16 befestigt, beispielsweise mit der Stützwand 16 verschweißt, sind. Zur Befestigung der Befestigungselemente 26 weisen die Befestigungsflansche 30 Befestigungsöffnungen 30a auf. Um eine verbesserte Kräfteverteilung zu erreichen, sind zwischen einem Kopf 28a der Schraube 28 und dem Befestigungsflansch 30 sowie zwischen einer Mutter 28b und den Befestigungselementen 26 Unterlegscheiben 32 angeordnet.

Zur Anbringung der Tragarme 24 wird zunächst für jeden Tragarm 24 aus zwei Befestigungselementen 26, die spiegelbildlich aufeinandergelegt werden, eine Aufnahmeöffnung 26a gebildet. In dieser Konfiguration werden die Befestigungselemente 26 mit Hilfe der Schraube 28 und der Mutter 28b zunächst lose an dem Befestigungsflansch 30 befestigt. Anschließend wird der Tragarm 24 mit seinem Befestigungsende 24a in die Aufnahmeöffnung 26a eingeführt. Schließlich wird die Schraube 28 angezogen und somit die Befestigungselemente 26 um das Befestigungsende 24a festgezogen.

Da die Befestigungselemente 26 in ihrer Form flexibel sind, passen sie sich an die Form des Befestigungsendes 24a an, wodurch eine große Kontaktfläche zur Kraftübertragung von dem Tragarm 24 auf die Befestigungselemente 26 entsteht.

Je nach Form und Größe des zu lagernden Lagerguts können der Durchmesser und die Form des Tragarms 24 variiert werden. Dementsprechend sind die Befestigungselemente 26 in ihrem Querschnitt anzupassen.

Die Stützwand 16 besteht im Wesentlichen aus einem Tragblech 16c, in dem kreisförmige Öffnungen 16a zum Einlegen der Tragarme 24 vorgesehen sind. Um die Stabilität der Stützwand 16 zu erhöhen, sind Ränder 16b des Tragblechs 16c umgebogen und bilden einen Randfalz. Dies erhöht vor allem die Stabilität im Randbereich der Stützwand 16.

Des Weiteren sind Verstärkungsstreben 34 vorgesehen, die an der Stützwand 16 kraftschlüssig befestigt sind und diese abstützen.

Der Lagergutträger 10 ist insbesondere zur Aufnahme von Lagergut 36 in Form von Rollenbuchsen (sleeve rolls) in der Druckindustrie vorgesehen. Die Lagerung solcher Rollenbuchsen 36 stellt Anforderungen, die von dem Lagergutträger 10 erfüllt werden. So sollten die Rollenbuchsen 36 so gelagert werden, dass ihre Oberfläche nicht beschädigt wird. Des Weiteren soll dafür Sorge getragen werden, dass sie bei Schlägen oder ähnlicher mechanischer Krafteinwirkung nicht verformt werden.

Da die Rollenbuchsen oft aus einem Plastikrohr mit an dessen Außenfläche aufgebrachtem Prägegummi gebildet werden, das leicht zu beschädigen ist, ist es bevorzugt, dass die Außenfläche der Rollenbuchsen berührungsfrei gelagert wird.

In dieser Ausführungsform des Lagergutträgers 10 sind die Tragarme 24 längliche, röhrenförmige Metallarme, die einen kreisförmigen Querschnitt aufweisen. Auf diese Tragarme 24, die voneinander beabstandet an der Stützwand 16 angeordnet sind, werden die Rollenbuchsen 36 aufgeschoben.

Die Form der Tragarme 24 ist dabei an die Form der Innenfläche der Rollenbuchsen 36 angepasst, so dass die Tragarme 24 die Rollenbuchsen 36 von innen stützen. Eine Verformung der Rollenbuchsen 36 bei versehentlicher mechanischer Krafteinwirkung wird somit vermieden.

Durch den Abstand der Tragarme 24 voneinander werden ebenfalls die gelagerten Rollenbuchsen 36 voneinander beabstandet. Es ist somit nicht mehr möglich, dass die Rollenbuchsen 36 sich bei der Lagerung berühren und dabei gegenseitig ihre Oberfläche beschädigen können.

Bei der Lagerung des Lagergutträgers 10 entstehen durch den gewöhnlichen Betrieb des Lagerregals 40 Vibrationen und Stöße. Die auf den Tragarmen 24 gelagerten Rollenbuchsen 36 können, durch diese Vibrationen angeregt, von den Tragarmen 24 herunterrutschen und herausfallen. Um dem entgegenzuwirken weisen die Tragarme 24 eine Neigung auf die Stützwand 16 zu auf.

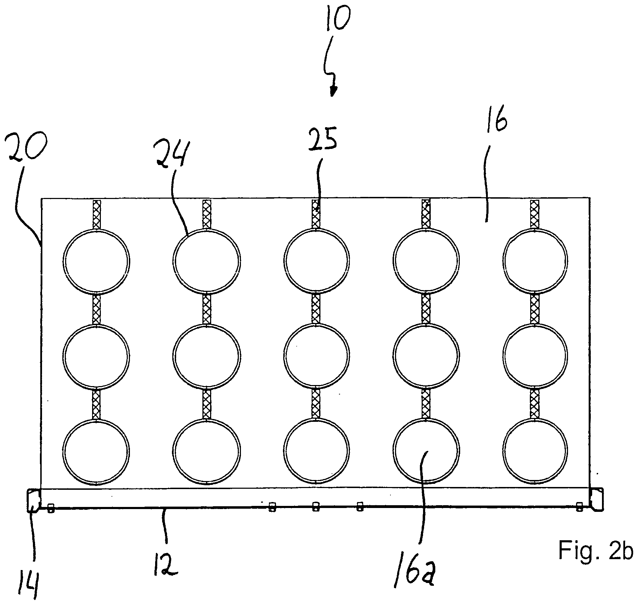

Damit die Rollenbuchsen 36 nicht durch Kontakt mit der Stützwand 16 beschädigt werden, ist, wie in Fig. 2b gezeigt, an der Stützwand 16 wenigstens ein Dämpfungselement 25 angebracht. Die Dämpfungselemente 25, die aus Moosgummi gebildet sind, verhindern einen direkten Kontakt der Rollenbuchsen 36 mit der Stützwand 16. Dadurch wird ein ungedämpfter Aufprall der Rollenbuchsen 36 auf die Stützwand 16, wie er beispielsweise beim Beladen der Tragarme 24 entstehen kann, wirksam vermieden.

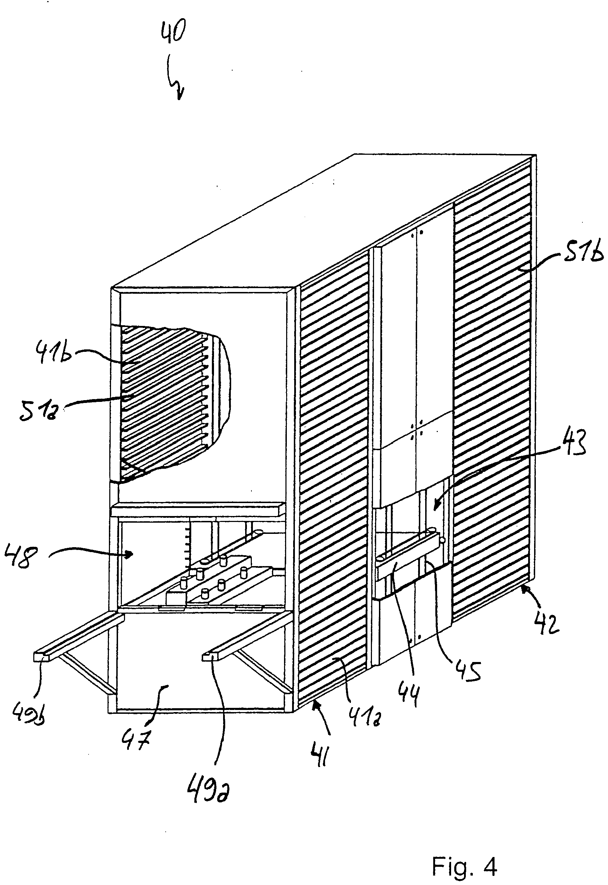

Ein Ausführungsbeispiel für ein Lagerregal 40, in dem die vorstehend beschriebenen Lagergutträger 10 Verwendung finden, ist in Fig. 4 zu sehen.

Das Lagerregal 40 weist zwei mit Abstand zueinander angeordnete Regalbereiche 41, 42 auf. Zwischen den Regalbereichen 41, 42 ist eine Transporteinrichtung 43 vorgesehen, die mit einer über Ketten 45 angetriebenen Plattform 44 ausgebildet ist. Die Regalbereiche 41, 42 weisen jeweils parallel zueinander ausgerichtete Seitenwände 41 a, 41 b auf.

An einer Stirnseite 47 des Regalbereichs 41 ist eine Beschickungs- und Entnahmeöffnung 48 vorgesehen, mittels derer das Lagerregal 40 mit Lagergutträgern 10 beschickt werden kann und mit der Lagergutträger 10 und/oder das darauf befindliche Lagergut 36 entnommen werden können.

Die Seitenwände 41 a, 41 b der Regalbereiche 41, 42 bestehen bei der dargestellten Ausführungsform jeweils aus Stahlblech, in welches nach innen gerichtete Trägerstützen 51 a, 51 b eingepresst sind. Die Trägerstützen 51 a, 51 b dienen als Trägerauflage für Lagergutträger 10. Die Höhe der Randwand 14 ist dabei so gewählt, dass durch benachbarte Trägerstützen 51 a, 51 b eine Führung erzielt wird.

Zur Lagerung von Rollenbuchsen 36 in dem Lagerregal 40 wird ein Lagergutträger 10 in die Entnahmeöffnung 48 beziehungsweise auf Auflagearme 49a, 49b platziert. Die zu lagernden Rollenbuchsen 36 werden auf die Tragarme 24 aufgesteckt und anschließend der Lagergutträger 10 in die Entnahmeöffnung 48 des Lagerregals 40 verschoben. Dort wird der Lagergutträger 10 automatisch auf die Plattform 44 der Transporteinrichtung 43 transportiert, welche den Lagergutträger 10 zu seiner Lagerposition in dem Lagerregal 40 verfährt. An der Lagerposition wird der Lagergutträger 10 dann auf die Trägerstützen 51 a, 51 b verschoben.

Der Lagergutträger 10 ermöglicht es, die Platzvorteile einer Lagerung in dem Lagerregal 40 für die Lagerung von Rollenbuchsen 36 nutzbar zu machen. Des Weiteren erlaubt der Lagergutträger 10 die sichere Lagerung von Rollenbuchsen 36 mit empfindlichen Außenoberflächen.

### Bezugszeichenliste

- 10: Lagergutträger
- 12: Auflageboden
- 14: Randwand
- 16: Stützwand
- 16a: Öffnung
- 16b: Rand
- 16c: Tragblech
- 18: Schraubverbindung

- 20: Stützwinkel
- 22: Schraube
- 24: Tragarm
- 24a: Befestigungsende
- 25: Dämpfungselement
- 26: Befestigungselement
- 26a: Aufnahmeöffnung
- 28: Schraube
- 28a: Kopf
- 28b: Mutter

- 30: Befestigungsflansch
- 30a: Befestigungsöffnung
- 32: Unterlegscheibe
- 34: Verstärkungsstrebe
- 36: Lagergut

- 40: Lagerregal
- 41: Regalbereich
- 41 a: Seitenwand
- 41 b: Seitenwand
- 42: Regalbereich
- 43: Transporteinrichtung
- 44: Plattform
- 45: Ketten
- 47: Stirnseite
- 48: Entnahmeöffnung
- 49a: Auflagearm
- 49b: Auflagearm

- 51 a: Trägerstütze
- 51 b: Trägerstütze

- α: Winkel
- β: Winkel

## Patentansprüche

1. Lagergutträger (10) für ein Lagerregal (40), das eine Vielzahl von übereinanderliegenden und beabstandeten Trägerstützen (51a, 51b) aufweist, die paarweise an sich gegenüberliegenden Seitenwänden aufweist, die paarweise an sich gegenüberliegenden Seitenwänden (41 a, 41 b) des Lagerregals (40) angeordnet sind und die den Lagergutträger (10) abstützen, wobei der Lagergutträger (10) einen Grundkörper (12) aufweist, der von einer Randwand (14) umgeben ist, wobei der Lagergutträger (10) eine Stützwand (16) aufweist, die von dem Grundkörper (12) abragt, wobei an der Stützwand (16) Tragarme (24) vorgesehen sind, die von der Stützwand (16) abragen und auf denen hülsenförmiges Lagergut (36), insbesondere Rollenbuchsen, ablegbar ist und wobei die Tragarme (24) gegenüber dem Grundkörper (12) unter einem Winkel (α), der insbesondere zwischen 0° und 5° beträgt, geneigt sind, **dadurch gekennzeichnet, dass** die Tragarme (24) mittels eines Befestigungselements (26), das ein Ende (24a) der Tragarme (24) kraftschlüssig umschließt, an der Stützwand (16) befestigt sind, wobei an der Stützwand (16) Befestigungsflansche (30) mit Befestigungsöffnungen (30a) zur Verbindung der Befestigungselemente (26) mit der Stützwand (16) vorgesehen sind und wobei zur Befestigung eines Tragarms (24) jeweils zwei an den Befestigungsflanschen (30) befestigte, symmetrisch zueinander angeordnete Metallschellen vorgesehen sind, die mit länglichen Befestigungsmitteln (28, 28b), an den Befestigungsöffnungen (30a) fixiert sind.

2. Lagergutträger nach Anspruch 1, **dadurch gekennzeichnet, dass** ein Stützwinkel (20) vorgesehen ist, der die Stützwand (16) an dem Auflageboden (12) fixiert und einen Winkel (β), der zwischen 85° und 90° beträgt, zwischen Stützwand (16) und Auflagekörper (12) festlegt.

3. Lagergutträger nach Anspruch 2, **dadurch gekennzeichnet, dass** der Stützwinkel (20) an dem Grundkörper (12) sowohl auf einer Tragarmseite der Stützwand (16) als auch auf der gegenüberliegenden Seite befestigt ist.

4. Lagergutträger nach einem der voranstehenden Ansprüche, **dadurch gekennzeichnet, dass** die Tragarme (24) lösbar an der Stützwand (16) befestigt sind.

5. Lagergutträger nach einem der voranstehenden Ansprüche, **dadurch gekennzeichnet, dass** die Tragarme (24) aus umgeformtem Metallblech oder aus Röhrenabschnitten gefertigt sind.

6. Lagergutträger nach einem der voranstehenden Ansprüche, **dadurch gekennzeichnet, dass** die Befestigungselemente (26) zur Selbstanpassung an die Form der Tragarme (24) ausgebildet sind.

7. Lagergutträger nach einem der voranstehenden Ansprüche, **dadurch gekennzeichnet, dass** die Stützwand (16) ein Tragblech (16c) mit Öffnungen (16a) zur Einführung der Tragarme (24) aufweist.

8. Lagergutträger nach Anspruch 7, **dadurch gekennzeichnet, dass** die Stützwand (16) Verstärkungsstreben (34) aufweist, wobei die Befestigungsflansche (30) im Bereich der Verstärkungsstreben (34) angeordnet sind.

9. Lagergutträger nach einem der voranstehenden Ansprüche, **dadurch gekennzeichnet, dass** die Stützwand (16) im Bereich der Tragarme (24) ein Dämpfungselement (25) aufweist.

10. Lagerregal (40), das eine Vielzahl von übereinanderliegenden und beabstandeten Trägerstützen (51 a, 51 b) aufweist, die paarweise an sich gegenüberliegenden Seitenwänden (41 a, 41 b) des Lagerregals (40) angeordnet sind und die Lagergutträger (10) abstützen, wobei eine steuerbare Transporteinrichtung (43) für die Lagergutträger (10) vorgesehen ist, mit wenigstens einem Lagergutträger (10) für ein derartiges Lagerregal (40), wobei der Lagergutträger (10) einen Grundkörper (12) aufweist, der von einer Randwand (14) umgeben ist, wobei der Lagergutträger (10) eine Stützwand (16) aufweist, die von dem Grundkörper (12) abragt, wobei an der Stützwand (16) Tragarme (24) vorgesehen sind, die von der Stützwand (16) abragen und auf denen hülsenförmiges Lagergut (36), insbesondere Rollenbuchsen, ablegbar ist und wobei die Tragarme (24) gegenüber dem Grundkörper (12) unter einem Winkel (α), der insbesondere zwischen 0° und 5° beträgt, geneigt sind.

11. Lagerregal nach Anspruch 10, **dadurch gekennzeichnet, dass** der Lagergutträger (10) nach einem der Ansprüche 1 bis 9 ausgebildet ist.

## Claims

1. Stored product carrier (10) for a storage rack (40), which has a plurality of supporting brackets (51a, 51b) which are spaced apart one above the other, are arranged in pairs on opposite side walls (41a, 41b) of the storage rack (40) and support the stored product carrier (10), wherein the stored product carrier (10) has a basic body (12) which is surrounded by an edge wall (14), wherein the stored product carrier (10) has a support wall (16) which projects from the basic body (12), wherein carrying arms (24), which project from the support wall (16) and on which sleeve-shaped stored products (36), in particular sleeve rolls, can be placed, are provided on the support wall (16), and wherein the carrying arms (24) are inclined with respect to the basic body (12) at an angle (α) which is, in particular, between 0° and 5°, **characterized in that** the carrying arms (24) are fastened on the support wall (16) by means of a fastening element (26), which encloses one end (24a) of the carrying arms (24) in a friction-locked manner, wherein fastening flanges (30) with fastening openings (30a) are provided on the support wall (16) for connecting the fastening elements (26) to the support wall (16) and wherein two metal clamps, which are arranged symmetrically with respect to each other and are fastened on the fastening flanges (30), are provided in each case for fastening one supporting arm (24), said metal clamps being fixed on the fastening openings (30a) by way of elongated fastening means (28, 28b).

2. Stored product carrier according to Claim 1, **characterized in that** there is provided an angle bracket (20) which secures the support wall (16) on the bearing surface (12) and fixes an angle (ß), which is between 85° and 90°, between support wall (16) and bearing body (12).

3. Stored product carrier according to Claim 2, **characterized in that** the angle bracket (20) is fastened on the basic body (12) both on a carrying arm side of the support wall (16) and on the opposite side.

4. Stored product carrier according to one of the preceding claims, **characterized in that** the carrying arms (24) are detachably fastened on the support wall (16).

5. Stored product carrier according to one of the preceding claims, **characterized in that** the carrying arms (24) are produced from formed sheet metal or from tube sections.

6. Stored product carrier according to one of the preceding claims, **characterized in that** the fastening elements (26) are realized to be self-adapting to the form of the carrying arms (24).

7. Stored product carrier according to one of the preceding claims, **characterized in that** the support wall (16) has a carrying plate (16c) with openings (16a) for the insertion of the carrying arms (24).

8. Stored product carrier according to Claim 7, **characterized in that** the support wall (16) has reinforcing struts (34), wherein the fastening flanges (30) are arranged in the region of the reinforcing struts (34).

9. Stored product carrier according to one of the preceding claims, **characterized in that** the support wall (16) has a damping element (25) in the region of the carrying arms (24).

10. Storage rack (40) which has a plurality of supporting brackets (51a, 51b) which are spaced apart one above the other, arranged in pairs on opposite side walls (41a, 41b) of the storage rack (40) and support the stored product carriers (10), wherein there is provided for the stored product carriers (10) a controllable conveying device (43), said storage rack having at least one stored product carrier (10) for a storage rack (40) of this type, wherein the stored product carrier (10) has a basic body (12) which is surrounded by an edge wall (14), wherein the stored product carrier (10) has a support wall (16) which projects from the basic body (12), wherein on the support wall (16) there are provided carrying arms (24) which project from the support wall (16) and on which sleeve-shaped stored products (36), in particular sleeve rolls, can be placed and wherein the carrying arms (24) are inclined with respect to the basic body (12) at an angle (α) which is, in particular, between 0° and 5°.

11. Storage rack according to Claim 10, **characterized in that** the stored product carrier (10) is realized according to one of claims 1 to 9.

## Revendications

1. Élément porteur (10) de produits à stocker pour un rayonnage de stockage (40), qui comprend une pluralité de soutiens porteurs (51a, 51b) situés les uns au-dessus des autres et écartés, qui sont agencés par paires sur des parois latérales opposées (41a, 41b) du rayonnage (14) et qui soutiennent l'élément porteur (10), tel que l'élément porteur (10) comprend un corps de base (12) qui est entouré par une paroi périphérique (14), l'élément porteur (10) comprenant une paroi de soutien (16) qui dépasse du corps de base (12), dans lequel des bras porteurs (24) sont prévus sur la paroi de soutien (16), lesquels dépassent de la paroi de soutien (16) et sur ceux-ci un produit à stocker (36) en forme de douille, en particulier des manchons en rouleaux, peut être déposé, et dans lequel les bras porteurs (24) sont inclinés par rapport au corps de base (12) sous un angle (α), qui est en particulier entre 0° et 5°, **caractérisé en ce que** les bras porteurs (24) sont fixés sur la paroi de soutien (16) au moyen d'un élément de fixation (26) qui enserre en coopération de forces une extrémité (24a) des bras de soutien (24), dans lequel des brides de fixation (30) pourvues d'ouvertures de fixation (30a) pour la liaison des éléments de fixation (26) avec la paroi de soutien (16) sont prévues sur la paroi de soutien (16), et dans lequel pour la fixation d'un bras porteur (24) il est prévu respectivement deux colliers métalliques fixés sur les brides de fixation (30) et agencés symétriquement l'un par rapport à l'autre, qui sont fixés dans les ouvertures de fixation (30a) avec des moyens de fixation allongés (28, 28b).

2. Élément porteur selon la revendication 1, **caractérisé en ce qu'**il est prévu une équerre de soutien (20), qui fixe la paroi de soutien (16) sur le plancher d'appui (12) et qui impose un angle (β), entre 85° et 90°, entre la paroi de soutien (16) et le corps d'appui (12).

3. Élément porteur selon la revendication 2, **caractérisé en ce que** l'équerre de soutien (20) est fixée à la fois sur un côté de la paroi de soutien (16) vers les bras porteurs et sur le côté opposé.

4. Élément porteur selon l'une des revendications précédentes, **caractérisé en ce que** les bras porteurs (24) sont fixés de manière détachable sur la paroi de soutien (16).

5. Élément porteur selon l'une des revendications précédentes, **caractérisé en ce que** les bras porteurs (24) sont fabriqués à partir de tôles métalliques mises en forme ou à partir de tronçons de tube.

6. Élément porteur selon l'une des revendications précédentes, **caractérisé en ce que** les éléments de fixation (26) sont réalisés en vue d'une adaptation automatique à la forme des bras porteurs (24).

7. Élément porteur selon l'une des revendications précédentes, **caractérisé en ce que** la paroi de soutien (16) comprend une tôle porteuse (16c) avec des ouvertures (16a) pour l'introduction des bras porteurs (24).

8. Élément porteur selon la revendication 7, **caractérisé en ce que** la paroi de soutien (16) comprend des entretoises de renfort (34), et les brides de fixation (30) sont agencés dans la région des entretoises de renfort (34).

9. Élément porteur selon l'une des revendications précédentes, **caractérisé en ce que** la paroi de soutien (16) comprend un élément amortisseur (25) dans la région des bras porteurs (24).

10. Rayonnage de stockage (40), qui comprend une pluralité de soutiens porteurs (51a, 51b) disposés les uns au-dessus des autres et écartés, qui sont agencés par paires sur des parois latérales opposées (41a, 41b) du rayonnage (40) et qui soutiennent des éléments porteurs (10) pour produit à stocker, dans lequel il est prévu un système de transport commandé (43) pour les éléments porteurs (10), comprenant au moins un élément porteur (10) destiné à un tel rayonnage (40), dans lequel l'élément porteur (10) comprend un corps de base (12) qui est entouré par une paroi périphérique (14), dans lequel l'élément porteur (10) comprend une paroi de soutien (16) qui dépasse du corps de base (12), et sur la paroi de soutien (16) sont prévus des bras porteurs (24), qui dépassent de la paroi de soutien (16) et sur lesquels peut être déposé un produit à stocker (36) en forme de douille, en particulier des manchons de rouleau, et dans lequel les bras porteurs (24) sont inclinés par rapport au corps de base (12) sous un angle (α), qui est en particulier entre 0° et 5°.

11. Rayonnage de stockage selon la revendication 10, **caractérisé en ce que** l'élément porteur (10) est réalisé selon l'une des revendications 1 à 9.
